# EUROPEAN PATENT SPECIFICATION

(11) **EP 3 493 090 B1**
(45) Date of publication and mention of the grant of the patent: **02.06.2021**
(21) Application number: 18186439.8
(22) Date of filing: 31.07.2018
(51) Int. Cl.: G06F 21/56, G06F 21/78, G06F 21/79, G06F 21/85, G06K 19/077

(54) **CONTROL METHOD AND UNIT OF MOBILE STORAGE DEVICES, AND STORAGE MEDIUM**
STEUERUNGSVERFAHREN UND EINHEIT AUS MOBILEN SPEICHERVORRICHTUNGEN UND SPEICHERMEDIUM
PROCÉDÉ DE COMMANDE ET UNITÉ DE MÉMOIRES MOBILES ET SUPPORT D'INFORMATIONS

(30) Priority: 30.11.2017 CN 201711243953
(43) Date of publication of application: 05.06.2019
(73) Proprietor: Siemens Aktiengesellschaft, 80333 München (DE)
(72) Inventor: TANG, Wen, Beijing, 100102 (CN); BAGDOHN, Stefan, 81829 München (DE)
(74) Representative: Isarpatent

(56) References cited:
- EP-A2- 2 228 745
- US-A1- 2008 098 172
- US-A1- 2013 179 940
- US-A1- 2014 074 787
- US-A1- 2016 328 579

## Description

### BACKGROUND

### Technical Field

The present invention relates to the technical field of information security, particularly to a control method, unit and system of mobile storage devices.

### Related Art

Mobile storage devices, such as Universal Serial Bus (USB), greatly facilitate file storage, but also bring in virus transmission, network attack and other security risks at the same time.

At present, antivirus software is generally used for scanning the mobile storage devices to achieve the goal of virus checking and killing. The application of the antivirus software requires to know the characteristics of the viruses in advance, and cannot effectively cope with new viruses.

How to control the mobile storage devices to effectively prevent the security risks is an urgent problem at present.

US 2016/328579 A1 discloses a Universal Serial Bus (USB) dock for connecting a USB data storage device to a computing network. The USB dock includes a chassis for coupling the USB dock to the computing network, at least one panel coupled to the chassis, and at least one USB port coupled to at least one of the panels. The USB port indicates when a USB data storage device is connected to the USB port. The USB dock includes an operating system for booting the USB dock, for creating a table associated with the connected USB data storage device and for initiating an antivirus scan of the connected USB data storage device. If the antivirus scan detects a virus on the connected USB data storage device, an option of removing the virus from the connected USB data storage device is provided. If the detected virus is not removed from the connected USB data storage device, the USB port to which the USB data storage device is connected is disabled, thereby preventing the virus from entering the computing network. If the detected virus is removed from the connected USB data storage device, the operating system generates a token associated with the USB port to which the USB data storage device is connected. The token allows for enablement of the USB port to which the USB data storage device is connected. When the token expires, the USB port to which the USB data storage device is connected is disabled, thereby preventing enablement of the USB port to which the USB data storage device is connected.

### SUMMARY

The present invention provides a device management method according to claim 1, a device management unit according to claim 6, and a storage medium according to claim 10.

For this purpose, the present invention provides a control method, unit and system of mobile storage devices to effectively prevent security risks caused by the use of the mobile storage device.

For the first aspect, the present invention provides a device management method. The method comprises: after a device management unit detects that a mobile storage device is connected to a mobile storage device interface provided by the device management unit, executing the following device management steps: damaging a file system on the mobile storage device; receiving a file copy instruction, wherein the file copy instruction is used for indicating to copy an object file to the mobile storage device; in response to the file copy instruction, generating a first mirror image file of the file system of the mobile storage device, wherein the first mirror image file comprises the object file; and recovering damaged the file system of the mobile storage device by using the first mirror image file.

If the file is directly copied to a USB flash disk and then performing virus killing, the goal of virus checking and killing can also be achieved, but the following operations cannot be avoided: after the file copying is finished, in a virus killing process, if the mobile storage device is pulled out of the mobile storage device interface, the mobile storage device can be used normally and perform file copying, and if the file carries a virus, virus transmission can be possibly caused. In the method, the device management unit recovers the file system of the mobile storage device by using the mirror image file, thereby avoiding the virus transmission caused by the pull-out of the mobile storage device in the virus killing process.

The method optionally comprises: before damaging the file system on the mobile storage device, acquiring a first parameter, wherein the first parameter is the parameter required by recovering the file system of the mobile storage device; and when generating the first mirror image file, generating the first mirror image file according to the first parameter and the object file. Or, optionally, before damaging the file system on the mobile storage device, generating a second mirror image file of the file system of the mobile storage device, wherein the second mirror image file corresponds to the situation that the storage content in the mobile storage device is null; and when generating the first mirror image file, writing the object file into the second mirror image file to generate the first mirror image file.

A method for recovering and acquiring the file system of the mobile storage device is provided above.

Optionally, before generating the first mirror image file, inspecting whether the object file contains a virus or not, and if the object file does not contain viruses, generating the first mirror image file; or before recovering the file system of the mobile storage device by using the first mirror image file, inspecting whether the first mirror image file contains a virus or not; if the first mirror image file does not contain viruses, recovering the file system of the mobile storage device by using the first mirror image file.

In this way, the method can effectively prevent viruses carried by the object file from infecting downstream devices.

Optionally, before damaging the file system on the mobile storage device, formatting the file system of the mobile storage device.

In this way, the transmission of viruses carried by the mobile storage device itself can be avoided.

Optionally, after detecting that the mobile storage device is connected to the mobile storage device interface, before executing the device management steps, judging whether the mobile storage device is allowed to perform file copying through the mobile storage device interface or not; if the mobile storage device is allowed to perform file copying through the mobile storage device interface, executing the device management steps; and if the mobile storage device prohibited to perform file copying through the mobile storage device interface, giving out an alarm.

In this way, binding of the mobile storage device and the mobile storage device interface is implemented, and an unauthorized mobile storage device is prohibited to perform file copying through the interface, thereby further preventing hostile attacks, and effectively avoiding transmission of incidentally infected viruses.

Optionally, if the mobile storage device is allowed to perform file copying through the mobile storage device interface, giving out a first prompting message, wherein the first prompting message is used for indicating that the mobile storage device is allowed to perform file copying through the mobile storage device interface.

Optionally, after recovering the file system of the mobile storage device by using the first mirror image file, giving out a second prompting message, wherein the second prompting message is used for indicating the finish of the file copying of the mobile storage device.

Optionally, if the process of recovering the file system of the mobile storage device by using the first mirror image file is interrupted, giving out a third prompting message, wherein the third prompting message is used for indicating the interruption of the file copying of the mobile storage device.

In this way, information prompting is intuitively provided to a user of the mobile storage device through the prompting messages.

For the second aspect, the present invention provides a device management unit, comprising: a mobile storage device interface, configured to be used for connecting a mobile storage device; a memory, configured to be used for storing a device management program; and a processor, configured to be used for calling the device management program, detecting whether the mobile storage device interface is connected with a mobile storage device, and after detecting that the mobile storage device interface is connected with a mobile storage device, executing the following device management steps: damaging a file system on the connected mobile storage device; receiving a file copy instruction, wherein the file copy instruction is used for indicating to copy an object file to the connected mobile storage device; in response to the file copy instruction, generating a first mirror image file of the file system of the mobile storage device, wherein the first mirror image file comprises the object file; and recovering the damaged file system of the connected mobile storage device by using the first mirror image file.

If the file is directly copied to a USB flash disk and then performing virus killing, the goal of virus checking and killing can also be achieved, but the following operations can not be avoided: after the file copying is finished, in the virus killing process, if the mobile storage device is pulled out of the mobile storage device interface, the mobile storage device can be used normally and perform file copying, and if the file carries a virus, virus transmission can be possibly caused. The device management unit recovers the file system of the mobile storage device by using the mirror image file, thereby avoiding the virus transmission caused by the pull-out of the mobile storage device in the virus killing process.

Optionally, the memory is also used for storing an operating system, wherein the device management program operates on the operating system, and the operating system is customized, so that a user of the connected mobile storage device can perform the file copying operation only through a user interface provided by the device management program.

In this way, a possible malicious act of bypassing the device management method provided by the embodiments of the present invention and directly accessing the operating system to perform file copying can be avoided.

Optionally, the device management unit also comprises a display screen, wherein the display screen is configured to be used for displaying at least one of the following states of the mobile storage device interface: the mobile storage device interface is connected with a mobile storage device; the mobile storage device connected to the mobile storage device interface is allowed to perform file copying through the mobile storage device; the mobile storage device connected to the mobile storage device interface is prohibited to perform file copying through the mobile storage device; the file copying of the mobile storage device connected to the mobile storage device interface is finished; the mobile storage device connected to the mobile storage device interface is in use; after the mobile storage device connected to the mobile storage device interface is disconnected from the mobile storage device interface, the mobile storage device is not reconnected to the mobile storage device interface within the preset time.

In this way, the user of the mobile storage device can clearly and easily know the state of the mobile storage device by observing the display screen.

Optionally, the unit is connected with a file server through a secure channel, wherein the file server stores the object file.

For the fourth aspect, the present invention provides a storage medium, comprising a device management program, wherein when the device management program is called by a processor, executing the method provided by the first aspect or any possible implementation way of the first aspect.

### BRIEF DESCRIPTION OF THE DRAWINGS

FIG. 1 and FIG. 2 are structure diagrams of a device management unit provided by the embodiment of the present invention.
FIG. 3 is a flow chart of a mobile storage device control method provided by the embodiment of the present invention.
FIG. 4 is another schematic diagram of a device management unit provided by the embodiment of the present invention.

### DETAILED DESCRIPTION

As mentioned above, the use of a mobile storage device poses a risk of information security, especially for an operational technology (OT) system. The traditional OT system adopts a closed design, and the network attack is difficult to pose a threat to it. However, with the development of automated manufacturing and process control technologies, the OT system has adopted IT technology extensively and is no longer a closed system. Yet, the current OT system still lacks a complete security protection mechanism and is more susceptible to the external network attack due to its long running time.

On the other hand, the widespread use of the mobile storage device, such as a USB device and the like, in the OT system, such as a digital factory and the like, greatly increases the security risk. For example, a USB device is used for duplicating firmware or software from a file server of an IT network of an enterprise and copying it to one or more workstations on a factory production line. Once the USB device is infected with virus, the virus may be propagated to the workstations through the copy operation and may be further propagated to a critical control device such as a programmable logic controller (PLC), thereby eventually resulting in the breakdown of the entire OT system.

The embodiment of the present invention provides a control method, unit and system of mobile storage devices, which can effectively avoid security threats caused by the use of USB devices and other mobile storage devices when being applied to an OT system. It should be noted that the embodiments of the present invention are not only applicable to the OT system, but also applicable to any system using the mobile storage devices.

In the embodiment of the present invention, after a mobile storage device is inserted into a mobile storage device interface provided by a device management unit, the device management unit damages a file system on the mobile storage device, and generates a mirror image file of the file system of the mobile storage device after receiving a file copy instruction, wherein the first mirror image file comprises an object file which is to be copied to the mobile storage device by the file copy instruction; and then, the device management unit recovers the file system of the mobile storage device by using the mirror image file. If the file is directly copied to a USB flash disk and then performing virus killing, the goal of virus checking and killing can also be achieved, but the following operations can not be avoided: after the file copying is finished, in a virus killing process, if the mobile storage device is pulled out of the mobile storage device interface, the mobile storage device can be used normally and perform file copying, and if the file carries a virus, virus transmission can be possibly caused. In the embodiments of the present invention, the device management unit recovers the file system of the mobile storage device by using the mirror image file, thereby avoiding the virus transmission caused by the pull-out of the mobile storage device in the virus killing process.

Some descriptions involved in the embodiments of the present invention will be explained below. It should be noted that these explanations are for the convenience of understanding the embodiments of the present invention and should not be construed as limiting the protection scope of the present invention.

### 1. Mobile storage device

As opposed to a fixed storage device, the mobile storage device is a device capable of performing file copy and storage between different devices, it may include but not limited to:
- A USB device, also known as a mobile flash memory device;
- A phase change rewritable optical disk drive (PD) device;
- A magneto optical (MO) drive device;
- A mobile hard disk;
- A floppy drive (FD) device; and
- A flash memory device, such as a smart media (SM) card, a compact flash (CF) card, a multi media card, a secure digital (SD) card, a memory stick, a TF card and the like.

### 2. OT system

As defined by Gartner, Inc., the operational technology (OT) implements detection or control by directly supervising and/or controlling physical devices, processes and events in an enterprise by means of hardware and software. An OT system uses a computer to supervise or change the physical state of a system. An industrial control system is an example that may use the OT system. The ICS is implemented on the basis of the computer and is used for remotely supervising and/or controlling, for example, critical processes and physical functions in a factory. Examples of the OT system include a supervisory control and data acquisition (SCADA) system, a distributed control system (DCS), a computer numerical control (CNC) system (including computerized mechanical tools), and a scientific device (such as a digital oscilloscope).

### 3. Scenarios in which the OT system is exposed to a network attack due to the use of the mobile storage device

- Scenario I: when a USB device is connected to a file server under an IT environment of a company, malicious software infects the USB device with a virus, then the USB device is connected to an industrial host of a factory. The industrial host generally needs to continuously run and cannot be restarted, so that security patches cannot be installed in time, thus making the industrial host more susceptible to the virus.
- Scenario II: a maintainer or an engineer takes a USB device home, the USB device is used on a personal computer at home and is infected with a virus, and the USB device is brought back and used on a production line of a factory.
- An employee violates the rules of a company and deliberately infects a USB device with a virus, and replaces a USB device, which is used on a production line and has the same appearance, with the USB device infected with the virus.

There are so many similar scenarios in which a USB device is infected with a virus due to a hostile attack or accidentally, and these scenarios will not be listed one by one herein. Once the OT system is infected with the virus, the critical production process may be affected, even resulting in the breakdown of the entire OT system.

The embodiments of the present invention are described in detail with reference to the accompanying drawings.

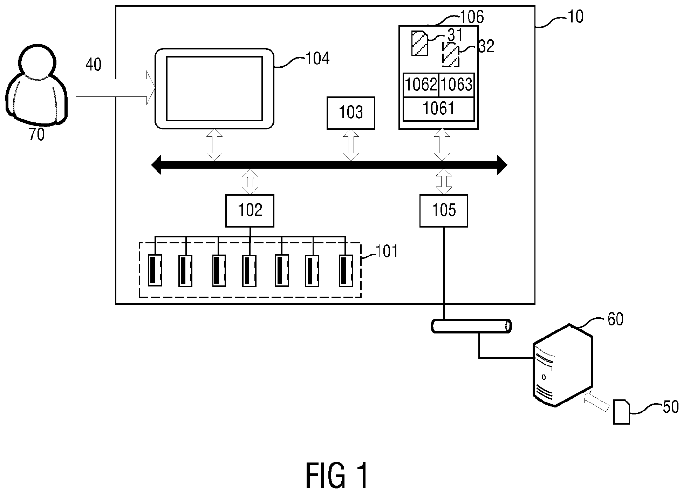

FIG. 1 is a schematic diagram of a device management unit 10 provided by the embodiment of the present invention. As shown in FIG. 1, the unit can comprise:
at least one mobile storage device interface 101, wherein each mobile storage device interface 101 is used for connecting a mobile storage device 20.

Optionally, each mobile storage device interface 101 is connected with a processor 103 of the device management unit 10 through an interface control card 102.

A processor 103, configured to be used for calling a device management program 1062 stored in a memory 106, and executing the device management method provided by the embodiment of the present invention.

The memory 106, in which an operating system 1061 and the device management program 1062 operating on the operating system 1061 are stored. Optionally, the operating system 1061 can be customized, so that a user 70 of the mobile storage device 20 can perform the file copying operation only through a user interface provided by the device management program 1062, thereby avoiding a possible malicious act of bypassing the device management method provided by the embodiments of the present invention and directly accessing the operating system to perform file copying. In addition, a first mirror image file 31 or a second mirror image file 32 of the mobile storage device 20 is also stored in the memory 106.

A display screen 104, which can be used for displaying the user interface. The user 70 of the mobile storage device 20 can send a file copy instruction 40 through the user interface and check the file copying state and the like of the mobile storage device 20. Optionally, the display screen 104 is a touch screen, and the user 70 completes operations on the user interface through the touch screen.

A network interface 105, which can be used for connecting a file server 60, wherein the file server 60 stores an object file 50 to be copied. When the embodiment of the present invention is applied to an OT system, the file server 60 can be a file server in other security domains (such as an office network) which is not connected with the OT system, and thus, can be infected by viruses. Or, in the embodiment of the present invention, the object file 50 can be in another mobile storage device 20 which is connected to another mobile storage device interface 101.

Optionally, the device management unit 10 can also perform authentication on the user 70. Only an authenticated user can perform file copying through the device management unit 10. Many ways for authentication can be used, for example, the user 70 inputs a user name and a password, and the device management unit 10 verifies the user name and the password. Or the device management unit 10 provides a card reader, the user 70 inserts an employee card into the card reader, and the card reader authenticates the user 70. Optionally, a mechanical locking device can be installed to each mobile storage device interface 101. If the user 70 is not authenticated, the locking device locks the mobile storage device 20 connected to the mobile storage device interface 101, and the user can not pull the mobile storage device 20 out of the interface.

The device management unit 10 provided by the embodiment of the present invention can be connected with the file server 60 through a secure channel, for example, a Virtual Private Network (VPN).

In addition, an antivirus program 1063 can also operate in the memory 106, and the processor 103 calls the antivirus program 1063 to perform virus checking and/or virus killing on the object file to be copied. Optionally, the antivirus program 1063 can comprise many different types of antivirus software, and different types of antivirus software are used for performing virus checking and killing on the object file 50 to be copied, thereby avoiding the problem of incomprehensive virus killing of a single type of software.

As shown in FIG. 1, the device management unit 10 provided by the embodiment of the present invention can be implemented by a host, the host is not externally connected with a keyboard or a mouse, the interfaces of the keyboard and mouse can be locked by a physical unit, and the keyboard and/or mouse can be used for performing system maintenance only after being unlocked with a key. Various components in the device management unit 10 can be connected with each other through buses, and the buses include, but not limited to data buses, address buses and control buses. The components can also be connected not through the buses, and the processor 103 is directly connected with the other components.

Optionally, various mobile storage device interfaces 101 can be implemented in an interface array way. The interface array can comprise tens of interfaces with which the mobile storage devices 20 are bound, i.e., only a mobile storage device interface 101 which is bound with one of the interfaces can perform file copying through the interface, and a mobile storage device 20 which is not bound can not perform file copying through the interface. One optional implementation way is that one interface is only bound with one mobile storage device 20, thereby ensuring that one mobile storage device (20) can perform file copying only through the interface bound with the mobile storage device (20). Taking USB flash disks as an example, a USB flash disk has a Universally Unique Identifier (UUID). The device management unit 10 provided by the embodiment of the present invention records the UUID of the USB flash disk bound with each mobile storage device interface 101. When a USB flash disk is inserted into a mobile storage device interface 101, the device management unit 10 reads the UUID of the USB flash disk and performs comparison with the recorded UUID of the USB flash disk bound with the interface, if consistent, determines that the inserted USB flash disk is bound with the interface, and otherwise, determines that the inserted USB flash disk is not bound with the interface. In addition, an identifier can be set in the file system of the mobile storage device 20. The device management unit 10 records the binding relation between the set identifier and a mobile storage device interface 101, and when a mobile storage device 20 is inserted into an interface, inspects the binding relation.

Optionally, the display screen 104 can display the state of each mobile storage device interface 101, and optionally, can give out an alarm under an abnormal condition. For example, when a mobile storage device 20 bound with a mobile storage device interface 101 is inserted into the interface, the processor 103 can control the display screen 104 to display the state of the interface as 'Device Connected Normally' by calling the device management program 1062; and when a mobile storage device 20 is inserted into an unbound mobile storage device interface 101, the display screen 104 can be controlled to display the state of the interface as 'Connection Abnormal' and give out a sound alarm, so that file copying and other subsequent operations are prohibited. Through binding the mobile storage device 20 with the mobile storage device interface 101, the unbound mobile storage device 20 can be effectively prevented from being inserted into the interface and performing the file copying operation.

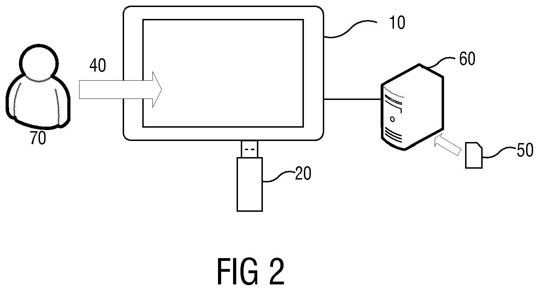

As shown in FIG. 2, the device management unit 10 provided by the embodiment of the present invention can also be implemented by a portable electronic device, such as a tablet computer, notebook computer, smartphone or the like. The portable electronic device is provided with a built-in interface which can be connected with the mobile storage device 20, and optionally, can also be connected with an external file server 60 through a network card and establish a VPN connection with the file server 60, thereby ensuring the communication security. The internal implementation of the portable electronic device as shown in FIG. 2 can also be as shown in FIG. 1. By adopting the implementation way as shown in FIG. 2, the user operations are convenient, and a developer only needs to develop the device management program 1062 and does not need to modify the hardware of the existing device, which is easier to implement.

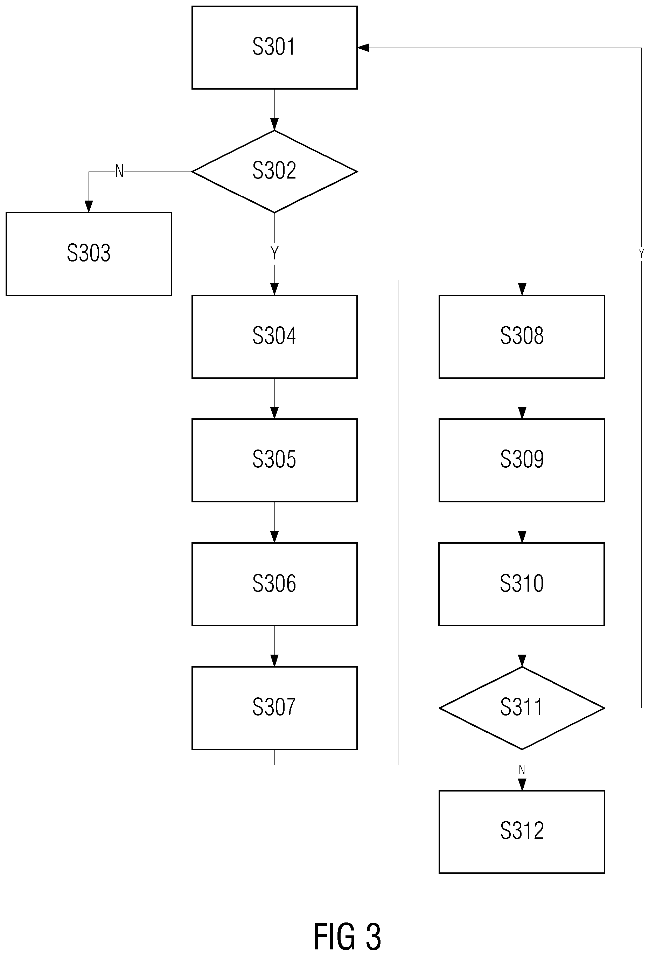

The device management unit 10 provided by the embodiment of the present invention is introduced above. The unit implements management on the storage operation of the mobile storage devices 20 by controlling various mobile storage device interfaces 101. The specific process of managing the mobile storage devices by the unit is described in combination with FIG. 3. As shown in FIG. 3, the process can comprise the following steps:
S301: Detecting that a mobile storage device 20 is inserted into a mobile storage device interface 101 by the device management unit 10. The device management unit 10 can monitor the state of each mobile storage device interface 101 in real time and judge whether a mobile storage device 20 is inserted into an interface or not.
S302: Judging whether the mobile storage device 20 is bound with the interface, i.e., whether the mobile storage device 20 is allowed to perform file copying through the interface or not. If the mobile storage device 20 is bound with the interface, executing step S304, and otherwise, executing step S303.
S303: Displaying the interface state as 'Connection Abnormal' on the display screen 104, for example, displaying the color of the interface as 'Red', and optionally, can give out a sound alarm and prohibit the file copying operation.
S304: Displaying the interface state as 'Device Connected Normally' on the display screen 104, for example, displaying the color of the interface as 'Green'.
S305: Preprocessing the mobile storage device 20.

The embodiments of the present invention can be implemented by many optional ways when preprocessing is performed on the mobile storage device 20:

### Way 1

Acquiring a parameter required by recovering the file system of the mobile storage device 20 (for example, the storage space size of the mobile storage device 20, the format of the file system of the mobile storage device 20, the size and quantity of data blocks or clusters of the file system, and the like), organizing the data blocks into a file and directory structure, and recording which data blocks are allocated to which file, which data blocks are not used, and the like, thereby facilitating the subsequent generation of the first mirror image file 31 of the file system of the mobile storage device 20. One possible situation is: no file is stored in the mobile storage device 20, and at this time, the parameter required by recovering the file system of the mobile storage device 20 also comprises relevant information of the data blocks and the file and directory (possibly only one root directory and corresponding system directory here) structure. The first mirror image file 31 comprises the object file 50 to be copied. Optionally, in the preprocessing process, the mobile storage device 20 can be formatted.

### Way 2

Generating a second mirror image file 32 of the file system of the mobile storage device 20, wherein the second mirror image file 32 corresponds to the situation that the storage content in the mobile storage device 20 is null. For example, firstly formatting the mobile storage device 20, and then generating the second mirror image file 32 and storing the second mirror image file 32 into a hard disk 102.

S306: After preprocessing the mobile storage device 20 by the step S305, damaging the file system on the mobile storage device 20. In general, an area corresponding to an initial part of a file system is used for storing the properties of the file system (for example, the size and quantity of data blocks or clusters, and the like), and additionally, can also be used for recording the process of organizing the data blocks into the file and directory structure and also recording which data blocks are allocated to which file, which data blocks are not used, and the like. Therefore, the file system can be damaged by clearing the whole area for locating the initial part of the file system on the mobile storage device 20, or by clearing the whole file system.

Since the damaged file system of the mobile storage device 20 is not available, if the mobile storage device 20 is pulled out of the mobile storage device interface 101 at this time, the mobile storage device 20 is not available. Optionally, the mobile storage device 20 can also give out an alarm, which is configured to be used for prompting an ongoing faulty operation.

S307: Receiving a file copy instruction 40 from a user 70. For example, the user 70 selects an object file 50 to be copied on the touch screen of the portable electronic device as shown in FIG. 2 and determines to copy the object file 50 into the mobile storage device 20.

S308: In response to the file copy instruction 40, generating a first mirror image file 31 of the file system of the mobile storage device 20.

If the Way 1 is adopted to perform preprocessing in the step S305, then in the step S308, the device management unit 10 generates the first mirror image file 31 of the file system of the mobile storage device 20 according to the storage space size of the mobile storage device 20 and the format of the file system of the mobile storage device 20 which are in the step S305, wherein the first mirror image file 31 comprises the object file 50.

If the Way 2 is adopted to perform preprocessing in the step S305, then in the step S308, the device management unit 10 writes the object file 50 into a second mirror image file 32 so as to generate the first mirror image file 31.

S309: Recovering the file system of the mobile storage device 20 by the device management unit 10 by using the first mirror image file 31. Optionally, after successfully recovering the file system of the mobile storage device 20 by using the first mirror image file 31, displaying the interface state as 'File copied Successfully' on the display screen 104, for example, displaying the color of the interface as 'Yellow', and optionally, giving out a sound prompt to prompt the user 70 to pull the mobile storage device 20 out of the interface. Then, the user 70 can pull the mobile storage device 20 out of the interface. When the embodiment of the present invention is applied to an OT system, the user 70 can copy the copied firmware or software into the OT system so as to be used for industrial production. Optionally, if a process terminal for recovering the file system, the user 70 for instance, pulls the device out of the interface in the process of recovering the file system of the mobile storage device 20, the device management unit 10 can give out an alarm.

Optionally, before generating the first mirror image file 31, the device management unit 10 can inspect whether the object file 50 contains a virus or not; and if the object file 50 does not contain viruses, generate the first mirror image file 31. Or, before recovering the file system of the mobile storage device 20 by using the first mirror image file 31, the device management unit 10 inspects whether the first mirror image file 31 contains a virus or not; if the first mirror image file 31 does not contain viruses, recover the file system of the mobile storage device 20 by using the first mirror image file 31.

S310: After the user 70 pulls out the mobile storage device 20, i.e., the mobile storage device 20 is disconnected from the mobile storage device interface 101, displaying the interface state as 'Device In Use' on the display screen 104 by the device management unit 10, for example, displaying the color of the interface as 'Orange'.

S311: Judging whether the mobile storage device 20 is inserted back into the mobile storage device interface 101 bound with the mobile storage device 20 after being pulled out within the present time (for example, within 12 hours, or before off-work time of the current day) or not, i.e., reconnected to the mobile storage device interface 101 bound with the mobile storage device 20; if so, returning to the step S301, and otherwise, executing step S312.

S312: Giving out an alarm by the device management unit 10.

In the steps above, the device management unit 10 can give out an alarm by making a sound through a connected loudspeaker, and can also give out an alarm by the flickering of a connected indicator lamp, or send the alarm message to a predefined user terminal, for example, a cell phone of a system manager.

Optionally, after detecting that a mobile storage device 20 is inserted into a mobile storage device interface 101 in the step S301, authenticating the user 70. If authenticated, allowing the execution of subsequent operations, and otherwise, prohibiting further operations. Optionally, recording the operations executed by the user 70, thereby bringing convenience to auditing afterwards.

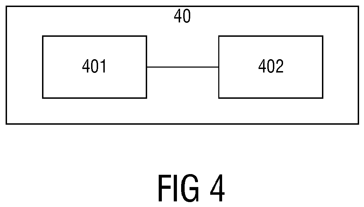

The process of the mobile storage device management method provided by the embodiment of the present invention is described above. FIG. 4 shows a structure diagram of another device management unit 30 provided by the embodiment of the present invention. As shown in FIG. 4, the unit can comprise:
an interface detection module 301, configured to be used for detecting whether a mobile storage device interface 101 of the device management unit 10 is inserted into a mobile storage device 20 or not; and
a device processing module 302, configured to be used for, after the detection module 301 detects that the mobile storage device interface 101 is inserted into a mobile storage device 20, executing the following device management steps: damaging a file system on the mobile storage device 20; receiving a file copy instruction 40, wherein the file copy instruction 40 is used for indicating to copy an object file 50 to the mobile storage device 20; in response to the file copy instruction 40, generating a first mirror image file 31 of the file system of the mobile storage device 20, wherein the first mirror image file 31 comprises the object file 50; and recovering the file system of the mobile storage device 20 by using the first mirror image file 31.

Optionally, the device processing module 302 can also be configured to be used for, before damaging the file system on the mobile storage device 20, acquiring a first parameter, wherein the first parameter comprises the storage space size of the mobile storage device 20 and the format of the file system of the mobile storage device 20; the device processing module 302, when generating the first mirror image file 31, is specifically configured to be suitable for generating the first mirror image file 31 according to the first parameter and the object file 50. Or, the device processing module 302 is also configured to be used for, before damaging the file system on the mobile storage device 20, generating a second mirror image file 32 of the file system of the mobile storage device 20, wherein the second mirror image file 32 corresponds to the situation that the storage content in the mobile storage device 20 is null; the device processing module 302, when generating the first mirror image file 31, is specifically configured to be suitable for writing the object file 50 into the second mirror image file 32 to generate the first mirror image file 31.

Optionally, the device processing module 302 is also configured to be used for, before generating the first mirror image file 31, inspecting whether the object file 50 contains a virus or not; the device processing module 302, when generating the first mirror image file 31, is specifically configured to be suitable for, if the object file 50 does not contain viruses, generating the first mirror image file 31; or the device processing module 302 is also configured to be used for, before recovering the file system of the mobile storage device 20 by using the first mirror image file 31, inspecting whether the first mirror image file 31 contains a virus or not; the device processing module 302, when recovering the file system of the mobile storage device 20 by using the first mirror image file 31, is specifically configured to be suitable for, if the first mirror image file 31 does not contain viruses, recovering the file system of the mobile storage device 20 by using the first mirror image file 31.

Optionally, the device processing module 302 is also used for, before damaging the file system on the mobile storage device 20, formatting the file system of the mobile storage device 20.

Optionally, the device processing module 302 is also configured to be used for, after detecting that a mobile storage device 20 is inserted into a mobile storage device interface 101, before executing the device management steps, judging whether the mobile storage device 20 is allowed to perform file copying through the mobile storage device interface 101; if the mobile storage device 20 is allowed to perform file copying through the mobile storage device interface 101, executing the device management steps; and if the mobile storage device 20 is prohibited to perform file copying through the mobile storage device interface 101, giving out an alarm.

Optionally, the device processing module 302 is also configured to be used for executing at least one of the following operations: if the mobile storage device 20 is allowed to perform file copying through the mobile storage device interface 101, giving out a first prompting message, wherein the first prompting message is used for indicating that the mobile storage device 20 is allowed to perform file copying through the mobile storage device interface 101; and/or after recovering the file system of the mobile storage device 20 by using the first mirror image file 31, giving out a second prompting message, wherein the second prompting message is used for indicating the finish of the file copying of the mobile storage device 20; if the process of recovering the file system of the mobile storage device 20 by using the first mirror image file 31 is interrupted, giving out a third prompting message, wherein the third prompting message is used for indicating the interruption of the file copying of the mobile storage device 20.

For other optional implementation ways of the unit, refer to the process as shown in the reference diagram 3, and no repetition will be made here.

The interface detection module 301 and device processing module 302 contained in the unit 30 as shown in FIG. 4 can also be seen as program modules in the device management program 1062 in FIG. 1, and can be called by the processor 103 in the device management unit 10 to implement the device management function of the device management unit 10 and/or execute the process of the method as shown in FIG. 3.

The embodiment of the present invention also provides a storage medium in which a device management program 1062 can be stored. During operation, the program implements the device management function of the device management unit 10 and/or execute the process of the method as shown in FIG. 3. The storage medium can be a floppy disk, hard disk, internal memory, magneto optical disk, optical disk, magnetic tape and non-volatile storage card. The storage medium can also be storage resources in a remote server (for example, an application server, and the remote server can be set in the cloud); and the device management unit 10 can download the device management program 1062 from the remote server, and operate the device management program 1062 on a local device or operate the device management program 1062 in the form of microservice.

In conclusion, the embodiment of the present invention provides a control method and unit of mobile storage devices, a computer program and a storage medium. After a mobile storage device is inserted into a mobile storage device interface provided by the device management unit, the device management unit damages the file system on the mobile storage device, and generates a mirror image file of the file system of the mobile storage device after receiving a file copy instruction, wherein the first mirror image file comprises an object file which is to be copied to the mobile storage device by the file copy instruction; and then, the device management unit recovers the file system of the mobile storage device by using the mirror image file. If the file is directly copied to a USB flash disk and then performing virus killing, the goal of virus checking and killing can also be achieved, but the following operations can not be avoided: after the file copying is finished, in the virus killing process, if the mobile storage device is pulled out of the mobile storage device interface, the mobile storage device can be used normally and perform file copying, and if the file carries a virus, virus transmission can be possibly caused. In the embodiment of the present invention, the device management unit recovers the file system of the mobile storage device by using the mirror image file, thereby avoiding the virus transmission caused by the pull-out of the mobile storage device in the virus killing process.

The embodiment of the present invention can be used for performing management on mobile storage devices in an OT system, and can be easily integrated into the production process of the OT system by using various techniques and mechanisms without the need for modifying the existing OT system, industrial devices and industrial production processes. The embodiment of the present invention can be used for copying firmware and/or software used in the OT system from an IT system to effectively lower the security risks of the OT system.

It needs to be noted that not all of the steps and modules in the above processes and system structure diagrams are necessary, and certain steps or modules may be omitted according to actual demands. The execution sequence of the steps is not fixed and may be adjusted according to demands. The system structure described in the above embodiments may be a physical structure or a logical structure, i.e., some modules may be implemented by the same physical entity, or some modules may be implemented individually by a plurality of physical entities or may be implemented together by certain components in a plurality of separate devices.

In the above embodiments, a hardware unit may be implemented in a mechanical form or an electrical form. For example, a hardware unit may include a permanent dedicated circuit or logic (such as a special processor, FPGA or ASIC) to complete a corresponding operation. The hardware unit may also include a programmable logic or circuit (such as a general processor or other programmable processor) and may be temporarily set by software to complete the corresponding operation. The specific implementation ways (mechanical form, or dedicated permanent circuit, or temporarily set circuit) may be determined based on cost and time considerations.

Although the present invention is presented and illustrated in detail with reference to the accompanying drawings and preferred embodiments above, the present invention is not limited to these embodiments that have been disclosed. Based on the plurality of embodiments mentioned above, it may be known by those skilled in the art that code auditing means in the different embodiments may be combined to obtain more embodiments of the present invention, and these embodiments also fall within the protection scope of the present invention.

**Drawing Marker List:**

| | | | |
|---|---|---|---|
| 10: Device management unit | 20: Mobile storage device | | 30: Device management unit |
| 40: File copy instruction | 50: Object file | | 60: File server |
| 70: User | 31: First mirror image file | | 32: Second mirror image file |
| 101: Mobile storage device interface | 102: Interface control card | | 103: Processor |
| 104: Display screen | 105: Network interface | | 106: Memory |
| 1061: Operating system | 1062: Device management program | | 1063: Antivirus program |
| S301: Detecting that a mobile storage device 20 is inserted into a mobile storage device interface 101 | | | |
| S302: Judging whether the mobile storage device 20 is bound with the mobile storage device interface 101 or not | | | |
| S303: Displaying the interface state as 'Connection Abnormal', and prohibiting file copying | | | |
| S304: displaying the interface state as 'Device Connected Normally' | | | |
| S305: Device preprocessing | | S306: Damaging a file system of the mobile storage device 20 | |
| S307: Receiving a file copy instruction 40 | | S308: Generating a first mirror image file 31 | |
| S309: Recovering the file system of the mobile storage device 20 by using the first mirror image file 31 | | | |
| S310: After the mobile storage device 20 is pulled out, displaying the interface state as 'device reuse' | | | |
| S311: Judging whether the mobile storage device 20 is inserted back within the preset time or not after being pulled out | | | |
| S312: Giving out an alarm | | | |
| 301: Interface detection module | | 302: Device processing module | |

## Claims

1. A device management method, comprising: after a device management unit (10) detects that a mobile storage device (20) is connected to a mobile storage device interface (101) provided by the device management unit (10), executing the following device management steps by the device management unit (10) :
damaging a file system on the mobile storage device (20);
receiving a file copy instruction (40), wherein the file copy instruction (40) is used for indicating to copy an object file (50) to the mobile storage device (20);
in response to the file copy instruction (40), generating a first mirror image file (31) of the file system of the mobile storage device (20), wherein the first mirror image file (31) comprises the object file (50); and
recovering the damaged file system of the mobile storage device (20) by using the first mirror image file (31),
wherein the device management steps also comprise: before damaging the file system on the mobile storage device (20), acquiring a first parameter, wherein the first parameter is the parameter required by recovering the file system of the mobile storage device (20); and
generating the first mirror image file (31), comprising: generating the first mirror image file (31) according to the first parameter and the object file (50), or wherein the device management steps also comprise: before damaging the file system on the mobile storage device (20), generating a second mirror image file (32) of the file system of the mobile storage device (20), wherein the second mirror image file (32) corresponds to the situation that the storage content in the mobile storage device (20) is null; and
generating the first mirror image file (31), comprising: writing the object file (50) into the second mirror image file (32) to generate the first mirror image file (31).

2. The method according to claim 1, **characterized in that**
the device management steps also comprise: before generating the first mirror image file (31), inspecting whether the object file (50) contains a virus or not; and generating the first mirror image file (31), comprising: if the object file (50) does not contain viruses, then generating the first mirror image file (31); or
the device management steps also comprise: before recovering the file system of the mobile storage device (20) by using the first mirror image file (31), inspecting whether the first mirror image file (31) contains a virus or not; and recovering the file system of the mobile storage device (20) by using the first mirror image file (31), comprising: if the first mirror image file (31) does not contain viruses, recovering the file system of the mobile storage device (20) by using the first mirror image file (31).

3. The method according to claim 1 or 2, **characterized in that** the device management step also comprises:
before damaging the file system on the mobile storage device (20), formatting the file system of the mobile storage device (20).

4. The method according to any of claims 1-3, **characterized by** also comprising: after detecting that the mobile storage device (20) is connected to the mobile storage device interface (101), before executing the device management steps, judging whether the mobile storage device (20) is allowed to perform file copying through the mobile storage device interface (101) or not;
if the mobile storage device (20) is allowed to perform file copying through the mobile storage device interface (101), executing the device management steps; and if the mobile storage device (20) is prohibited to perform file copying through the mobile storage device interface (101), giving out an alarm.

5. The method according to claim 4, **characterized by** also comprising at least one of the following steps:
if the mobile storage device (20) is allowed to perform file copying through the mobile storage device interface (101), giving out a first prompting message, wherein the first prompting message is used for indicating that the mobile storage device (20) is allowed to perform file copying through the mobile storage device interface (101);
after recovering the file system of the mobile storage device (20) by using the first mirror image file (31), giving out a second prompting message, wherein the second prompting message is used for indicating the finish of the file copying of the mobile storage device (20); and
if the process of recovering the file system of the mobile storage device (20) by using the first mirror image file (31) is interrupted, giving out a third prompting message, wherein the third prompting message is used for indicating the interruption of the file copying of the mobile storage device (20).

6. A device management unit (10), comprising:
a mobile storage device interface (101), configured to be used for connecting a mobile storage device (20);
a memory (106), configured to be used for storing a device management program (1062); and
a processor (103), configured to be used for calling the device management program (1062), detecting whether the mobile storage device interface (101) is connected with a mobile storage device (20) or not, and after detecting that the mobile storage device interface (101) is connected to a mobile storage device (20), executing the following device management steps:
damaging a file system on the mobile storage device (20);
receiving a file copy instruction (40), wherein the file copy instruction (40) is used for indicating to copy an object file (50) to the mobile storage device (20);
in response to the file copy instruction (40), generating a first mirror image file (31) of the file system of the mobile storage device (20), wherein the first mirror image file (31) comprises the object file (50); and
recovering the damaged file system of the mobile storage device (20) by using the first mirror image file (31),
wherein the device management steps also comprise: before damaging the file system on the mobile storage device (20), acquiring a first parameter, wherein the first parameter is the parameter required by recovering the file system of the mobile storage device (20); and
generating the first mirror image file (31), comprising: generating the first mirror image file (31) according to the first parameter and the object file (50), or wherein the device management steps also comprise: before damaging the file system on the mobile storage device (20), generating a second mirror image file (32) of the file system of the mobile storage device (20), wherein the second mirror image file (32) corresponds to the situation that the storage content in the mobile storage device (20) is null; and
generating the first mirror image file (31), comprising: writing the object file (50) into the second mirror image file (32) to generate the first mirror image file (31).

7. The device management unit according to claim 6, **characterized in that** the memory (106) is also configured to be used for storing an operating system (1061), wherein the device management program (1062) operates on the operating system (1061), and the operating system (1061) is customized, so that a user (70) of the connected mobile storage device (20) can perform the file copying operation only through a user interface provided by the device management program (1062).

8. The device management unit (10) according to claim 6 or 7, **characterized in that** the device management unit (10) also comprises a display screen (104), wherein the display screen (104) is configured to be used for displaying at least one of the following states of the mobile storage device interface (101):
the mobile storage device interface (101) is connected with a mobile storage device (20);
the mobile storage device (20) connected to the mobile storage device interface (101) is allowed to perform file copying through the mobile storage device (20);
the mobile storage device (20) connected to the mobile storage device interface (101) is prohibited to perform file copying through the mobile storage device (20);
the file copying of the mobile storage device (20) connected to the mobile storage device interface (101) is finished;
the mobile storage device (20) connected to the mobile storage device interface (101) is in use; and
after the mobile storage device (20) connected to the mobile storage device interface (101) is disconnected from the mobile storage device interface (101), the mobile storage device (20) is not reconnected to the mobile storage device interface (101) within the preset time.

9. The device management unit according to any of claims 6-8, **characterized in that** the unit is connected with a file server (60) through a secure channel, wherein the file server (60) stores the object file (50).

10. A storage medium, comprising a device management program (1062), wherein when the device management program (1062) is called by a processor, executing by the processor the method of any of claims 1-5.

## Patentansprüche

1. Vorrichtungsmanagementverfahren, das Folgendes umfasst:
nachdem eine Vorrichtungsmanagementeinheit (10) detektiert, dass eine mobile Speichervorrichtung (20) mit einer Schnittstelle einer mobilen Speichervorrichtung (101) verbunden ist, die durch die Vorrichtungsmanagementeinheit (10) bereitgestellt wird, Ausführen der folgenden Vorrichtungsmanagementschritte durch die Vorrichtungsmanagementeinheit (10):
Beschädigen eines Dateisystems auf der mobilen Speichervorrichtung (20);
Empfangen einer Dateikopieranweisung (40), wobei die Dateikopieranweisung (40) verwendet wird, um anzugeben, eine Objektdatei (50) auf die mobile Speichervorrichtung (20) zu kopieren;
als Reaktion auf die Dateikopieranweisung (40) Erzeugen einer ersten Spiegelbilddatei (31) des Dateisystems der mobilen Speichervorrichtung (20), wobei die erste Spiegelbilddatei (31) die Objektdatei (50) umfasst; und
Wiederherstellen des beschädigten Dateisystems der mobilen Speichervorrichtung (20) durch Verwenden der ersten Spiegelbilddatei (31),
wobei die Vorrichtungsmanagementschritte außerdem Folgendes umfassen: vor dem Beschädigen des Dateisystems auf der mobilen Speichervorrichtung (20) Erfassen eines ersten Parameters, wobei der erste Parameter der Parameter ist, der durch das Wiederherstellen des Dateisystems der mobilen Speichervorrichtung (20) benötigt wird; und
Erzeugen der ersten Spiegelbilddatei (31), das Folgendes umfasst: Erzeugen der ersten Spiegelbilddatei (31) gemäß dem ersten Parameter und der Objektdatei (50) oder wobei die Vorrichtungsmanagementschritte außerdem Folgendes umfassen: vor dem Beschädigen des Dateisystems auf der mobilen Speichervorrichtung (20) Erzeugen einer zweiten Spiegelbilddatei (32) des Dateisystems der mobilen Speichervorrichtung (20), wobei die zweite Spiegelbilddatei (32) der Situation entspricht, dass der Speicherinhalt in der mobilen Speichervorrichtung (20) ungültig ist; und
Erzeugen der ersten Spiegelbilddatei (31), das Folgendes umfasst: Schreiben der Objektdatei (50) in die zweite Spiegelbilddatei (32), um die erste Spiegelbilddatei (31) zu erzeugen.

2. Verfahren nach Anspruch 1, **dadurch gekennzeichnet, dass**
die Vorrichtungsmanagementschritte außerdem Folgendes umfassen: vor dem Erzeugen der ersten Spiegelbilddatei (31) Prüfen, ob die Objektdatei (50) einen Virus enthält oder nicht; und Erzeugen der ersten Spiegelbilddatei (31), das Folgendes umfasst: dann, wenn die Objektdatei (50) keine Viren enthält, Erzeugen der ersten Spiegelbilddatei (31); oder
die Vorrichtungsmanagementschritte außerdem Folgendes umfassen: vor dem Wiederherstellen des Dateisystems der mobilen Speichervorrichtung (20) durch Verwenden der ersten Spiegelbilddatei (31) Prüfen, ob die erste Spiegelbilddatei (31) einen Virus enthält oder nicht; und Wiederherstellen des Dateisystems der mobilen Speichervorrichtung (20) durch Verwenden der ersten Spiegelbilddatei (31), das Folgendes umfasst: dann, wenn die erste Spiegelbilddatei (31) keine Viren enthält, Wiederherstellen des Dateisystems der mobilen Speichervorrichtung (20) durch Verwenden der ersten Spiegelbilddatei (31).

3. Verfahren nach Anspruch 1 oder 2, **dadurch gekennzeichnet, dass** der Vorrichtungsmanagementschritt außerdem Folgendes umfasst:
vor dem Beschädigen des Dateisystems auf der mobilen Speichervorrichtung (20) Formatieren des Dateisystems der mobilen Speichervorrichtung (20).

4. Verfahren nach einem der Ansprüche 1-3, **dadurch gekennzeichnet, dass** es außerdem Folgendes umfasst: nach dem Detektieren, dass die mobile Speichervorrichtung (20) mit der Schnittstelle einer mobilen Speichervorrichtung (101) verbunden ist, vor dem Ausführen der Vorrichtungsmanagementschritte Beurteilen, ob der mobilen Speichervorrichtung (20) erlaubt ist, ein Dateikopieren durch die Schnittstelle einer mobilen Speichervorrichtung (101) auszuführen oder nicht;
dann, wenn der mobilen Speichervorrichtung (20) erlaubt ist, ein Dateikopieren durch die Schnittstelle einer mobilen Speichervorrichtung (101) auszuführen, Ausführen der Vorrichtungsmanagementschritte; und dann, wenn der mobilen Speichervorrichtung (20) verboten ist, ein Dateikopieren durch die Schnittstelle einer mobilen Speichervorrichtung (101) auszuführen, Ausgeben eines Alarms.

5. Verfahren nach Anspruch 4, **dadurch gekennzeichnet, dass** es außerdem mindestens einen der folgenden Schritte umfasst:
dann, wenn der mobilen Speichervorrichtung (20) erlaubt ist, ein Dateikopieren durch die Schnittstelle einer mobilen Speichervorrichtung (101) auszuführen, Ausgeben einer ersten Aufforderungsnachricht, wobei die erste Aufforderungsnachricht verwendet wird, um anzugeben, dass der mobilen Speichervorrichtung (20) erlaubt ist, ein Dateikopieren durch die Schnittstelle einer mobilen Speichervorrichtung (101) auszuführen;
nach dem Wiederherstellen des Dateisystems der mobilen Speichervorrichtung (20) durch Verwenden der ersten Spiegelbilddatei (31) Ausgeben einer zweiten Aufforderungsnachricht, wobei die zweite Aufforderungsnachricht verwendet wird, um das Ende des Dateikopierens der mobilen Speichervorrichtung (20) anzugeben; und
dann, wenn der Prozess des Wiederherstellens des Dateisystems der mobilen Speichervorrichtung (20) durch Verwenden der ersten Spiegelbilddatei (31) unterbrochen wird, Ausgeben einer dritten Aufforderungsnachricht, wobei die dritte Aufforderungsnachricht verwendet wird, um die Unterbrechung des Dateikopierens der mobilen Speichervorrichtung (20) anzugeben.

6. Vorrichtungsmanagementeinheit (10), die Folgendes umfasst:
eine Schnittstelle einer mobilen Speichervorrichtung (101), die konfiguriert ist, zum Verbinden einer mobilen Speichervorrichtung (20) verwendet zu werden;
einen Speicher (106), der konfiguriert ist, zum Speichern eines Vorrichtungsmanagementprogramms (1062) verwendet zu werden; und
einen Prozessor (103), der konfiguriert ist, zum Aufrufen des Vorrichtungsmanagementprogramms (1062), Detektieren, ob die Schnittstelle einer mobilen Speichervorrichtung (101) mit einer mobilen Speichervorrichtung (20) verbunden ist oder nicht, und nach dem Detektieren, dass die Schnittstelle einer mobilen Speichervorrichtung (101) mit einer mobilen Speichervorrichtung (20) verbunden ist, Ausführen der folgenden Vorrichtungsmanagementschritte verwendet zu werden:
Beschädigen eines Dateisystems auf der mobilen Speichervorrichtung (20);
Empfangen einer Dateikopieranweisung (40), wobei die Dateikopieranweisung (40) verwendet wird, um anzugeben, eine Objektdatei (50) auf die mobile Speichervorrichtung (20) zu kopieren;
als Reaktion auf die Dateikopieranweisung (40) Erzeugen einer ersten Spiegelbilddatei (31) des Dateisystems der mobilen Speichervorrichtung (20), wobei die erste Spiegelbilddatei (31) die Objektdatei (50) umfasst; und
Wiederherstellen des beschädigten Dateisystems der mobilen Speichervorrichtung (20) durch Verwenden der ersten Spiegelbilddatei (31),
wobei die Vorrichtungsmanagementschritte außerdem Folgendes umfassen: vor dem Beschädigen des Dateisystems auf der mobilen Speichervorrichtung (20) Erfassen eines ersten Parameters, wobei der erste Parameter der Parameter ist, der durch das Wiederherstellen des Dateisystems der mobilen Speichervorrichtung (20) benötigt wird; und
Erzeugen der ersten Spiegelbilddatei (31), das Folgendes umfasst: Erzeugen der ersten Spiegelbilddatei (31) gemäß dem ersten Parameter und der Objektdatei (50) oder wobei die Vorrichtungsmanagementschritte außerdem Folgendes umfassen: vor dem Beschädigen des Dateisystems auf der mobilen Speichervorrichtung (20) Erzeugen einer zweiten Spiegelbilddatei (32) des Dateisystems der mobilen Speichervorrichtung (20), wobei die zweite Spiegelbilddatei (32) der Situation entspricht, dass der Speicherinhalt in der mobilen Speichervorrichtung (20) ungültig ist; und
Erzeugen der ersten Spiegelbilddatei (31), das Folgendes umfasst: Schreiben der Objektdatei (50) in die zweite Spiegelbilddatei (32), um die erste Spiegelbilddatei (31) zu erzeugen.

7. Vorrichtungsmanagementeinheit nach Anspruch 6, **dadurch gekennzeichnet, dass** der Speicher (106) außerdem konfiguriert ist, zum Speichern eines Betriebssystems (1061) verwendet zu werden, wobei das Vorrichtungsmanagementprogramm (1062) auf dem Betriebssystem (1061) arbeitet und das Betriebssystem (1061) maßgeschneidert ist, so dass ein Anwender (70) der verbundenen mobilen Speichervorrichtung (20) den Dateikopiervorgang nur durch eine Anwenderschnittstelle, die durch das Vorrichtungsmanagementprogramm (1062) bereitgestellt wird, ausführen kann.

8. Vorrichtungsmanagementeinheit (10) nach Anspruch 6 oder 7, **dadurch gekennzeichnet, dass** die Vorrichtungsmanagementeinheit (10) außerdem einen Anzeigebildschirm (104) umfasst, wobei der Anzeigebildschirm (104) konfiguriert ist, zum Anzeigen mindestens eines der folgenden Zustände der Schnittstelle einer mobilen Speichervorrichtung (101) verwendet zu werden:
die Schnittstelle einer mobilen Speichervorrichtung (101) ist mit einer mobilen Speichervorrichtung (20) verbunden;
der mobilen Speichervorrichtung (20), die mit der Schnittstelle einer mobilen Speichervorrichtung (101) verbunden ist, ist es erlaubt, ein Dateikopieren durch die mobile Speichervorrichtung (20) auszuführen;
der mobilen Speichervorrichtung (20), die mit der Schnittstelle einer mobilen Speichervorrichtung (101) verbunden ist, ist es verboten, ein Dateikopieren durch die mobile Speichervorrichtung (20) auszuführen;
das Dateikopieren der mobilen Speichervorrichtung (20), die mit der Schnittstelle einer mobilen Speichervorrichtung (101) verbunden ist, ist beendet;
die mobile Speichervorrichtung (20), die mit der Schnittstelle einer mobilen Speichervorrichtung (101) verbunden ist, ist in Verwendung; und
nachdem die mobile Speichervorrichtung (20), die mit der Schnittstelle einer mobilen Speichervorrichtung (101) verbunden ist, von der Schnittstelle einer mobilen Speichervorrichtung (101) getrennt wird, die mobile Speichervorrichtung (20) nicht mit der Schnittstelle einer mobilen Speichervorrichtung (101) innerhalb der voreingestellten Zeit neu verbunden wird.

9. Vorrichtungsmanagementeinheit nach einem der Ansprüche 6-8, **dadurch gekennzeichnet, dass** die Einheit mit einem Datei-Server (60) durch einen sicheren Kanal verbunden ist, wobei der Datei-Server (60) die Objektdatei (50) speichert.

10. Speichermedium, das ein Vorrichtungsmanagementprogramm (1062) umfasst, wobei, wenn das Vorrichtungsmanagementprogramm (1062) durch einen Prozessor aufgerufen wird, Ausführen durch den Prozessor des Verfahrens nach einem der Ansprüche 1-5.

## Revendications

1. Procédé de gestion de dispositif, comprenant : après la détection, par une unité de gestion de dispositif (10), qu'un dispositif de stockage mobile (20) est connecté à une interface (101) de dispositif de stockage mobile fournie par l'unité de gestion de dispositif (10), l'exécution des étapes de gestion de dispositif suivantes par l'unité de gestion de dispositif (10) :
l'endommagement d'un système de fichiers sur le dispositif de stockage mobile (20) ;
la réception d'une instruction de copie de fichier (40), l'instruction de copie de fichier (40) servant à indiquer de copier un fichier objet (50) vers le dispositif de stockage mobile (20) ;
en réponse à l'instruction de copie de fichier (40), la génération d'un premier fichier image-miroir (31) du système de fichiers du dispositif de stockage mobile (20), le premier fichier image-miroir (31) comprenant le fichier objet (50) ; et
la récupération du système de fichiers endommagé du dispositif de stockage mobile (20) par utilisation du premier fichier image-miroir (31),
les étapes de gestion de dispositif comprenant également : avant l'endommagement du système de fichiers sur le dispositif de stockage mobile (20), l'acquisition d'un premier paramètre, le premier paramètre étant le paramètre nécessaire à la récupération du système de fichiers du dispositif de stockage mobile (20) ; et
la génération du premier fichier image-miroir (31) comprenant : la génération du premier fichier image-miroir (31) selon le premier paramètre et le fichier objet (50), ou les étapes de gestion de dispositif comprenant également : avant l'endommagement du système de fichiers sur le dispositif de stockage mobile (20), la génération d'un deuxième fichier image-miroir (32) du système de fichiers du dispositif de stockage mobile (20), le deuxième fichier image-miroir (32) correspondant à la situation où le contenu de stockage dans le dispositif de stockage mobile (20) est vide ; et
la génération du premier fichier image-miroir (31) comprenant : l'écriture du fichier objet (50) dans le deuxième fichier image-miroir (32) afin de générer le premier fichier image-miroir (31).

2. Procédé selon la revendication 1, **caractérisé en ce que**
les étapes de gestion de dispositif comprennent également : avant la génération du premier fichier image-miroir (31), l'inspection visant à établir si le fichier objet (50) contient ou non un virus ; et la génération du premier fichier image-miroir (31) comprenant : si le fichier objet (50) ne contient pas de virus, alors la génération du premier fichier image-miroir (31) ; ou
les étapes de gestion de dispositif comprennent également : avant la récupération du système de fichiers du dispositif de stockage mobile (20) par utilisation du premier fichier image-miroir (31), l'inspection visant à établir si le premier fichier image-miroir (31) contient ou non un virus ; et la récupération du système de fichiers du dispositif de stockage mobile (20) par utilisation du premier fichier image-miroir (31) comprenant : si le premier fichier image-miroir (31) ne contient pas de virus, la récupération du système de fichiers du dispositif de stockage mobile (20) par utilisation du premier fichier image-miroir (31).

3. Procédé selon la revendication 1 ou 2, **caractérisé en ce que** l'étape de gestion de dispositif comprend également :
avant l'endommagement du système de fichiers sur le dispositif de stockage mobile (20), le formatage du système de fichiers du dispositif de stockage mobile (20).

4. Procédé selon l'une quelconque des revendications 1 à 3, **caractérisé en ce qu'**il comprend également : après la détection que le dispositif de stockage mobile (20) est connecté à l'interface (101) de dispositif de stockage mobile, avant l'exécution des étapes de gestion de dispositif, la détermination si le dispositif de stockage mobile (20) est autorisé ou non à réaliser une copie de fichier par le biais de l'interface (101) de dispositif de stockage mobile ;
si le dispositif de stockage mobile (20) est autorisé à réaliser une copie de fichier par le biais de l'interface (101) de dispositif de stockage mobile, l'exécution des étapes de gestion de dispositif ; et, si le dispositif de stockage mobile (20) n'est pas autorisé à réaliser une copie de fichier par le biais de l'interface (101) de dispositif de stockage mobile, l'émission d'une alerte.

5. Procédé selon la revendication 4, **caractérisé en ce qu'**il comprend également au moins une des étapes suivantes :
si le dispositif de stockage mobile (20) est autorisé à réaliser une copie de fichier par le biais de l'interface (101) de dispositif de stockage mobile, l'émission d'un premier message-guide, le premier message-guide servant à indiquer que le dispositif de stockage mobile (20) est autorisé à réaliser une copie de fichier par le biais de l'interface (101) de dispositif de stockage mobile ;
après la récupération du système de fichiers du dispositif de stockage mobile (20) par utilisation du premier fichier image-miroir (31), l'émission d'un deuxième message-guide, le deuxième message-guide servant à indiquer la fin de la copie de fichier du dispositif de stockage mobile (20) ; et
si le processus de récupération du système de fichiers du dispositif de stockage mobile (20) par utilisation du premier fichier image-miroir (31) est interrompu, l'émission d'un troisième message-guide, le troisième message-guide servant à indiquer l'interruption de la copie de fichier du dispositif de stockage mobile (20).

6. Unité de gestion de dispositif (10), comprenant :
une interface (101) de dispositif de stockage mobile, configurée pour servir à connecter un dispositif de stockage mobile (20) ;
une mémoire (106), configurée pour servir à stocker un programme de gestion de dispositif (1062) ; et
un processeur (103), configuré pour servir à appeler le programme de gestion de dispositif (1062), détecter si l'interface (101) de dispositif de stockage mobile est connectée ou non à un dispositif de stockage mobile (20) et, après avoir détecté que l'interface (101) de dispositif de stockage mobile est connectée à un dispositif de stockage mobile (20), exécuter les étapes de gestion de dispositif suivantes :
l'endommagement d'un système de fichiers sur le dispositif de stockage mobile (20) ;
la réception d'une instruction de copie de fichier (40), l'instruction de copie de fichier (40) servant à indiquer de copier un fichier objet (50) vers le dispositif de stockage mobile (20) ;
en réponse à l'instruction de copie de fichier (40), la génération d'un premier fichier image-miroir (31) du système de fichiers du dispositif de stockage mobile (20), le premier fichier image-miroir (31) comprenant le fichier objet (50) ; et
la récupération du système de fichiers endommagé du dispositif de stockage mobile (20) par utilisation du premier fichier image-miroir (31),
les étapes de gestion de dispositif comprenant également : avant l'endommagement du système de fichiers sur le dispositif de stockage mobile (20), l'acquisition d'un premier paramètre, le premier paramètre étant le paramètre nécessaire à la récupération du système de fichiers du dispositif de stockage mobile (20) ; et
la génération du premier fichier image-miroir (31) comprenant : la génération du premier fichier image-miroir (31) selon le premier paramètre et le fichier objet (50), ou les étapes de gestion de dispositif comprenant également : avant l'endommagement du système de fichiers sur le dispositif de stockage mobile (20), la génération d'un deuxième fichier image-miroir (32) du système de fichiers du dispositif de stockage mobile (20), le deuxième fichier image-miroir (32) correspondant à la situation où le contenu de stockage dans le dispositif de stockage mobile (20) est vide ; et
la génération du premier fichier image-miroir (31) comprenant : l'écriture du fichier objet (50) dans le deuxième fichier image-miroir (32) afin de générer le premier fichier image-miroir (31).

7. Unité de gestion de dispositif selon la revendication 6, **caractérisée en ce que** la mémoire (106) est également configurée pour servir à stocker un système d'exploitation (1061), le programme de gestion de dispositif (1062) fonctionnant sur le système d'exploitation (1061) et le système d'exploitation (1061) étant personnalisé de façon à permettre à un utilisateur (70) du dispositif de stockage mobile (20) connecté de réaliser l'opération de copie de fichier uniquement par le biais d'une interface-utilisateur fournie par le programme de gestion de dispositif (1062).

8. Unité de gestion de dispositif (10) selon la revendication 6 ou 7, l'unité de gestion de dispositif (10) étant **caractérisée en ce qu'**elle comprend également un écran d'affichage (104), l'écran d'affichage (104) étant configuré pour servir à afficher au moins un des états suivants de l'interface (101) de dispositif de stockage mobile :
l'interface (101) de dispositif de stockage mobile est connectée à un dispositif de stockage mobile (20) ;
le dispositif de stockage mobile (20) connecté à l'interface (101) de dispositif de stockage mobile est autorisé à réaliser une copie de fichier par le biais du dispositif de stockage mobile (20) ;
le dispositif de stockage mobile (20) connecté à l'interface (101) de dispositif de stockage mobile n'est pas autorisé à réaliser une copie de fichier par le biais du dispositif de stockage mobile (20) ;
la copie de fichier du dispositif de stockage mobile (20) connecté à l'interface (101) de dispositif de stockage mobile est terminée ;
le dispositif de stockage mobile (20) connecté à l'interface (101) de dispositif de stockage mobile est en cours d'utilisation ; et
après que le dispositif de stockage mobile (20) connecté à l'interface (101) de dispositif de stockage mobile a été déconnecté de l'interface (101) de dispositif de stockage mobile, le dispositif de stockage mobile (20) n'est pas reconnecté à l'interface (101) de dispositif de stockage mobile dans un laps de temps prédéfini.

9. Unité de gestion de dispositif selon l'une quelconque des revendications 6 à 8, l'unité étant **caractérisée en ce qu'**elle est connectée à un serveur de fichiers (60) par le biais d'un canal sécurisé, le serveur de fichiers (60) stockant le fichier objet (50).

10. Support de stockage, comprenant un programme de gestion de dispositif (1062) ; lorsque le programme de gestion de dispositif (1062) est appelé par un processeur, l'exécution par le processeur du procédé selon l'une quelconque des revendications 1 à 5.
